(19) Europäisches Patentamt
European Patent Office
Office européen des brevets

(11) **EP 3 248 487 B1**

(12) **EUROPEAN PATENT SPECIFICATION**

(45) Date of publication and mention
of the grant of the patent:
**23.03.2022 Bulletin 2022/12**

(21) Application number: **17174106.9**

(22) Date of filing: **28.10.2010**

(51) International Patent Classification (IPC):
**A24F 40/46** *(2020.01)*          *A24F 40/20* *(2020.01)*

(52) Cooperative Patent Classification (CPC):
**A24F 40/46;** A24F 40/20

(54) **AN ELECTRICALLY HEATED SMOKING SYSTEM WITH IMPROVED HEATER**

ELEKTRISCH ERHITZTES RAUCHSYSTEM MIT VERBESSERTER HEIZVORRICHTUNG

SYSTÈME DE FUMAGE CHAUFFÉ ÉLECTRIQUEMENT DOTÉ D'UN CHAUFFAGE AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2009 EP 09252501**

(43) Date of publication of application:
**29.11.2017 Bulletin 2017/48**

(60) Divisional application:
**22156378.6**

(62) Document number(s) of the earlier application(s) in
accordance with Art. 76 EPC:
**14184236.9 / 2 850 956**
**10782535.8 / 2 493 342**

(73) Proprietor: **Philip Morris Products S.A.
2000 Neuchâtel (CH)**

(72) Inventors:
• **Greim, Olivier**
  **1400 Yverdon-les-Bains (CH)**
• **Plojoux, Julien**
  **1208 Geneva (CH)**
• **Ruscio, Dani**
  **2088 Cressier (CH)**

(74) Representative: **Ponder, William Anthony John
Reddie & Grose LLP
The White Chapel Building
10 Whitechapel High Street
London E1 8QS (GB)**

(56) References cited:
**EP-A1- 0 503 767          EP-A2- 0 438 862
WO-A1-95/27412          WO-A1-2007/066374
DE-A1- 19 854 005          US-A- 5 322 075
US-A- 5 353 813          US-A- 5 649 554
US-A1- 2008 216 828**

## Description

The present invention relates to an electrically heated smoking system including a heater for heating an aerosol-forming substrate.

US-A-5 353 813, discloses a bladed tubular array for use as an external heating element in an electrical smoking article. The heating element comprises a number of carbon blades arranged around a reinforcing tube of spiral wound paper board. One electrical connection is formed at a free end of the blades, while a common ring of carbon connects the other end of the carbon blades to form a common electrical connection. When the blades are powered, they heat to provide a heating zone with a temperature in the range of 300 °C to about 900 °C.

WO95/27412 discloses a system in which a plurality of individual heaters are formed on corresponding insulators. The individual heaters are arranged to form a structure configured to receive a substrate to be heated.

US-A-5 322 075 discloses a smoking article comprising a heater having resistive heating elements printed on a flexible polyimide substrate formed into a cylindrical shape. The flavour-generating medium is coated onto the heating elements as individual charges, each charge being vaporised for each puff on the smoking article.

The inventors have appreciated that it would be advantageous to provide an electrically heated smoking system which is easier to manufacture and also requires fewer components in its construction.

The invention is defined in the independent claim, to which reference should be made. Advantageous features are set out in the dependent claims. Some aspects and embodiments of the disclosure are presented for information only, and do not form part of the claimed invention.

According to a first aspect of the disclosure, there is provided an electrically heated smoking system for receiving an aerosol-forming substrate, the system comprising: at least one heater for heating the substrate to form the aerosol, and a power supply for supplying power to the at least one heater, wherein the at least one heater comprises one or more electrically conductive tracks on an electrically insulating substrate, the one or more electrically conductive tracks having temperature coefficient of resistance characteristics such that the one or more electrically conductive tracks can act as both a resistive heater and as a temperature sensor.

According to the first aspect of the disclosure, there is also provided a heater for use in an electrically heated smoking system, the heater comprising one or more electrically conductive tracks on an electrically insulating substrate.

According to the first aspect of the disclosure, there is also provided use of a heater in an electrically heated smoking system, the heater comprising one or more electrically conductive tracks on an electrically insulating substrate, the one or more electrically conductive tracks having temperature coefficient of resistance characteristics such that the one or more electrically conductive tracks can act as both a resistive heater and as a temperature sensor.

By using a heater comprising electrically conductive tracks on an electrically insulating substrate, which can act as both a heater and as a temperature sensor, the number and size of components required in the electrically heated smoking system can be reduced. This allows the size of the electrically heated smoking system to be reduced. In addition, the electrically insulating substrate can be very thin, allowing further size reduction. In addition, some or all of the necessary electronics, wiring and connections may be incorporated on the same electrically insulating substrate as the heater. In addition, the heater may be manufactured more straightforwardly and cost effectively than some prior art heaters which require each heating element to be individually formed. The heater allows a great deal of flexibility in the design: the electrically conductive tracks can be arranged on the electrically insulating substrate as desired and in order to give the desired heat distribution.

Preferably, the electrically heated smoking system further comprises electronic circuitry arranged to control supply of power from the power supply to the at least one heater.

Preferably, the power supply supplies power to the at least one heater in dependence upon the temperature sensed by the one or more electrically conductive tracks and a desired temperature. That is to say, feedback is provided which allows the power supply to maintain the heater, and the aerosol-forming substrate, at a particular desired temperature. This is achieved without the need for a separate temperature sensor. Preferably, the electrically heated smoking system includes electronic circuitry arranged for this purpose. Preferably, the desired temperature is a temperature at which the heater heats, but does not burn, the aerosol-forming substrate.

Preferably, the electrically heated smoking system further comprises a thermally insulating material for insulating the at least one heater. The thermally insulating material may insulate the material from the outside of the electrically heated smoking system. Preferably, the heater comprises a portion of electrically insulating substrate which has a thermally insulating or/and reflective structure thereon.

According to a second aspect of the disclosure, there is provided an electrically heated smoking system for receiving an aerosol-forming substrate, the system comprising: at least one heater for heating the substrate to form the aerosol, the at least one heater comprising one or more electrically conductive tracks on an electrically insulating substrate; a power supply for supplying power to the at least one heater; and a thermally insulating material for insulating the at least one heater.

According to the second aspect of the disclosure, there is also provided a thermally insulating material for use in an electrically heated smoking system having a heater comprising one or more electrically conductive tracks on an electrically insulating substrate.

According to the second aspect of the disclosure, there is also provided use of a thermally insulating material in an electrically heated smoking system having a heater comprising one or more electrically conductive tracks on an electrically insulating substrate. The thermally insulating material reduces heat loss from the heater and also protects a user using the electrically heated smoking system from burning. The thermally insulating material is preferably positioned around the aerosol forming substrate so as to provide the greatest thermal insulation. The thermally insulating material must be a material which will not degrade in the high temperatures reached in the electrically heated smoking system. Not all thermally insulating materials will be suitable. Preferably, the thermally insulating material comprises a metal or another non-combustible material. In one example, the metal is gold. In another example, the metal is silver. A metal is advantageous as it may reflect heat back into the electrically heated smoking system.

Preferably, the thermally insulating material comprises a plurality of air cavities. The air cavities are arranged in a regular pattern. In one preferred embodiment, the air cavities are hexagonal and arranged in a honeycomb structure. The thermally insulating material may be provided on the electrically insulating substrate in addition to the electrically conductive tracks. This allows the electrically conductive tracks and thermally insulating material to be manufactured as one element. For some methods of manufacture, the electrically conductive tracks and the thermally insulating material may be made as part of the same process. Alternatively, the thermally insulating material may be provided in the electrically heated smoking system as a separate element.

The electrically insulating substrate can be very thin, allowing size reduction. In addition, some or all of the necessary electronics, wiring and connections may be incorporated on the same electrically insulating substrate as the heater. In addition, the heater may be manufactured more straightforwardly and cost effectively than some prior art heaters which require each heating element to be individually formed. The heater allows a great deal of flexibility in the design: the electrically conductive tracks can be straightforwardly arranged on the electrically insulating substrate as desired and in order to give the desired heat distribution.

Preferably, the electrically heated smoking system further comprises electronic circuitry arranged to control supply of power from the power supply to the at least one heater.

Preferably, the power supply supplies power to the at least one heater in dependence upon a desired temperature. Preferably, the electrically heated smoking system includes electronic circuitry arranged for this purpose. Preferably, the desired temperature is a temperature at which the heater heats, but does not burn, the aerosol-forming substrate.

Preferably, the one or more electrically conductive tracks have temperature coefficient of resistance characteristics such that the one or more electrically conductive tracks can act as resistive heaters and as a temperature sensor.

In one embodiment, the one or more electrically conductive tracks comprise a plurality of portions, each portion being separately connectable to the power supply. This provides a number of advantages. First, it allows the different portions to be heated for different durations, which may enhance the smoking experience, depending on the nature of the aerosol-forming substrate. Second, it allows the different portions to be heated at different temperatures, which may also enhance the smoking experience, depending on the nature of the aerosol-forming substrate. Third, it allows a particular portion of the heater to be activated at any one time. This allows only a portion of the aerosol-forming substrate to be heated at any one time. This may be advantageous as it means that each portion of the aerosol-forming substrate may be heated only once, and not reheated.

In one embodiment, the electrically conductive track or tracks comprise a single track of electrically conductive material. A first end of the single track is connectable to the power supply and a second end of the single track is connectable to the power supply. In that case, the power supply may also be connectable to one or more central sections of the single track to provide a plurality of portions, each portion being separately connectable to the power supply. In another embodiment, the electrically conductive track or tracks comprise a plurality of tracks of electrically conductive material, each track being separately connectable to the power supply.

The electrically conductive tracks are arranged on the electrically insulating substrate in a formation most suitable to heat the aerosol-forming substrate. Any number of configurations is possible.

In a first embodiment of either aspect of the disclosure, outside the scope of the claims, the electrically insulating substrate is rigid and is arranged to be inserted into the aerosol-forming substrate. If the electrically insulating substrate is appropriately sized and is rigid, it may be inserted directly into the aerosol-forming substrate. The electrically insulating substrate may be reinforced in some way in order to provide sufficient rigidity. In that case, if a thermally insulating material is provided, it may be provided to surround the aerosol-forming substrate.

In a second embodiment, the electrically insulating substrate is tubular and the one or more electrically conductive tracks are on the inside of the tubular electrically insulating substrate. Such an arrangement may be used as an external heater. The external heater may be used to surround or partially surround the aerosol-forming substrate. In one embodiment, the aerosol-forming substrate is solid and is in the form of a cylindrical plug. In that case, preferably the internal diameter of the external heater is the same as or slightly bigger than the external diameter of the aerosol-forming plug. In the second embodiment, if a thermally insulating material is provided, it may be provided to surround the aerosol-forming substrate and external heater. The thermally insulating material may be provided on the electrically insulating substrate and the external heater may be formed by rolling the electrically insulating substrate so that the electrically conductive tracks are towards the inside of the tube and the thermally insulating material is towards the outside of the tube.

In a third embodiment , the electrically insulating substrate is tubular and the one or more electrically conductive tracks are on the outside of the tubular electrically insulating substrate. Such an arrangement may be used as an internal heater. The internal heater may be inserted into the aerosol-forming substrate. In one embodiment, the aerosol-forming substrate is solid and comprises a hollow tube of aerosol-forming substrate. In that case, preferably the external diameter of the internal heater is the same as or slightly smaller than the internal diameter of the tube of aerosol-forming substrate. In that case, if a thermally insulating material is provided, it may be provided to surround the aerosol-forming substrate.

The at least one heater may comprise an end heater for heating the end of the aerosol-forming substrate, the end heater comprising one or more electrically conductive tracks on an electrically insulating substrate. In one embodiment, the end heater comprises a spiral electrically conductive track on a circular or substantially circular electrically insulating substrate.

The electrically conductive tracks preferably comprise an electrically resistive material. More preferably, the electrically conductive tracks are metallic. Most preferably, the electrically conductive tracks comprise one or more of: silver, platinum, copper, nickel and palladium. Other materials are possible, for example electrically "conductive" ceramics (such as, for example, molybdenum disilicide), carbon, graphite, metal alloys and composite materials made of a ceramic material and a metallic material. Such composite materials may comprise doped or undoped ceramics. Examples of suitable doped ceramics include doped silicon carbides. Examples of suitable metals, as well as those listed above, include titanium, zirconium and tantalum. Examples of suitable metal alloys include stainless steel, nickel-, cobalt-, chromium-, aluminium- titanium-zirconium-, hafnium-, niobium-, molybdenum-, tantalum-, tungsten-, tin-, gallium-, manganese- and iron-containing alloys, and super-alloys based on nickel, iron, cobalt, stainless steel, Timetal® and iron-manganese-aluminium based alloys. Timetal® is a registered trade mark of Titanium Metals Corporation, 1999 Broadway Suite 4300, Denver, Colorado. In composite materials, the electrically resistive material may optionally be embedded in, encapsulated or coated with an insulating material or vice-versa, depending on the kinetics of energy transfer and the external physicochemical properties required.

The electrically conductive tracks may be plated with a protective layer. The electrically conductive tracks may be plated with one or more of: gold, nickel and glass. Plating the electrically conductive tracks may be advantageous if the electrically conductive tracks comprise a material which will readily oxidize or corrode in some way.

Preferably, the electrically insulating substrate comprises one or more of: paper, glass, ceramic, anodized metal, coated metal, and Polyimide. The ceramic may comprise mica, Alumina ($Al_2O_3$) or Zircona ($ZrO_2$). Other suitable materials may be used.

In a first embodiment of the disclosure, the at least one heater is formed by: providing the electrically insulating substrate; depositing an electrically conductive paste onto the electrically insulating substrate using a template to define a pattern for the electrically conductive paste; and drying the electrically conductive paste to form the electrically conductive tracks.

In that first embodiment, the electrically insulating substrate may be any suitable electrically insulating material but is preferably a ceramic or an anodized metal. In that first embodiment, the electrically conductive paste may be any suitable paste but preferably includes metal particles. The metal may be silver. The electrically conductive paste may also include binders and plasticizers.

In a second embodiment of the disclosure, the at least one heater is formed by: providing the electrically insulating substrate; covering substantially the entire surface of the electrically insulating substrate with an electrically conductive material; protecting portions of the electrically conductive material with a mask defining a pattern for the electrically conductive material; and removing the unprotected portions of the electrically conductive material.

In that second embodiment, the electrically insulating substrate may be any suitable electrically insulating material but is preferably polyimide. In that second embodiment, the electrically conductive material may be any suitable material but preferably includes metal alloys. The metal may be copper. The electrically conductive tracks may be plated with one or more protective layers. In one embodiment, the copper electrically conductive tracks are plated with a first layer of nickel and a second layer of gold.

In a third embodiment of the disclosure, the at least one heater is formed by: providing the electrically insulating substrate; coating the electrically insulating substrate with a metal film; coating the metal film with a layer of photoresist material; protecting portions of the photoresist material with a mask defining a pattern for the electrically conductive paste; removing the unprotected portions of the photoresist material using a light source and chemicals (the exposed photoresist material being soluble in specific solution); removing the portions of the metal film unprotected by the photoresist material; and removing the remaining photoresist material to reveal the metal film in the form of the electrically conductive tracks.

In that third embodiment, the electrically insulating substrate may be any suitable electrically insulating material but is preferably ceramic. Most preferably, the substrate is Alumina ($Al_2O_3$) or Zircona ($ZrO_2$). In that third embodiment, the metal film may be any suitable metal film but is preferably platinum film. The electrically conductive tracks may be plated with one or more protective layers. In one embodiment, the electrically conductive tracks are plated with a layer of glass.

The aerosol-forming substrate preferably comprises a tobacco-containing material containing volatile tobacco flavour compounds which are released from the aerosol-forming substrate upon heating. Alternatively, the aerosol-forming substrate may comprise a non-tobacco material.

Preferably, the aerosol-forming substrate further comprises an aerosol former. Examples of suitable aerosol formers are glycerine and propylene glycol.

The aerosol-forming substrate is preferably a solid substrate. In a preferred embodiment, the aerosol-forming substrate comprises a tubular substrate having a cavity for receiving the at least one heater. The solid substrate may comprise, for example, one or more of: powder, granules, pellets, shreds, spaghettis, strips or sheets containing one or more of: herb leaf, tobacco leaf, fragments of tobacco ribs, reconstituted tobacco, homogenised tobacco, extruded tobacco and expanded tobacco. The solid substrate may be in loose form, or may be provided in a suitable container or cartridge. Optionally, the solid aerosol-forming substrate may contain additional tobacco or non-tobacco volatile flavour compounds, to be released upon heating of the substrate.

Optionally, the solid aerosol-forming substrate may be provided on or embedded in a thermally stable carrier. In a preferred embodiment, the carrier is a tubular carrier having a thin layer of the solid substrate deposited on its inner surface, or on its outer surface, or on both its inner and outer surfaces. Such a tubular carrier may be formed of, for example, a paper, or paper like material, a non-woven carbon fibre mat, a low mass open mesh metallic screen, or a perforated metallic foil or any other thermally stable polymer matrix. Alternatively, the carrier may take the form of powder, granules, pellets, shreds, spaghettis, strips or sheets.

The solid aerosol-forming substrate may be deposited on the surface of the carrier in the form of, for example, a sheet, foam, gel or slurry. The solid aerosol-forming substrate may be deposited on the entire surface of the carrier, or alternatively, may be deposited in a pattern in order to provide a non-uniform flavour delivery during use.

,Alternatively, the carrier may be a non-woven fabric or fibre bundle into which tobacco components have been incorporated. The non-woven fabric or fibre bundle may comprise, for example, carbon fibres, natural cellulose fibres, or cellulose derivative fibres.

Alternatively, the aerosol-forming substrate may be a liquid substrate. If a liquid aerosol-forming substrate is provided, the electrically heated smoking system preferably comprises means for retaining the liquid. For example, the liquid aerosol-forming substrate may be retained in a container. Alternatively or in addition, the liquid aerosol-forming substrate may be absorbed into a porous carrier material. The porous carrier material may be made from any suitable absorbent plug or body, for example, a foamed metal or plastics material, polypropylene, terylene, nylon fibres or ceramic. The liquid aerosol-forming substrate may be retained in the porous carrier material prior to use of the electrically heated smoking system or alternatively, the liquid aerosol forming substrate material may be released into the porous carrier material during, or immediately prior to use. For example, the liquid aerosol-forming substrate may be provided in a capsule. The shell of the capsule preferably melts upon heating and releases the liquid aerosol-forming substrate into the porous carrier material. The capsule may optionally contain a solid in combination with the liquid.

If the aerosol-forming substrate is a liquid aerosol-forming substrate, the electrically heated smoking system may further comprise means for heating a small amount of liquid at a time. The means for heating a small amount of liquid at a time may include, for example, a liquid passageway in communication with the liquid substrate. The liquid aerosol-forming substrate is typically forced into the liquid passageway by capillary force. The at least one heater is preferably arranged such that during use, only the small amount of liquid aerosol-forming substrate within the liquid passageway, and not the liquid within the container, is heated and volatilised.

Alternatively, or in addition, if the aerosol-forming substrate is a liquid aerosol-forming substrate, the electrically heated smoking system may further comprise an atomiser in contact with the liquid aerosol-forming substrate source and including the at least one heater. In addition to the heater, the atomiser may include one or more electromechanical elements such as piezoelectric elements. Additionally or alternatively, the atomiser may also include elements that use electrostatic, electromagnetic or pneumatic effects. The electrically heated smoking system may still further comprise a condensation chamber.

During operation, the aerosol-forming substrate may be completely contained within the electrically heated smoking system. In that case, a user may puff on a mouthpiece of the electrically heated smoking system. Alternatively, during operation, the aerosol-forming substrate may be partially contained within the electrically heated smoking system. In that case, the aerosol-forming substrate may form part of a separate article and the user may puff directly on the separate article.

The electrically heated smoking system may further comprise a sensor to detect air flow indicative of a user taking a puff. In that embodiment, preferably, the sensor is connected to the power supply and the system is arranged to energise the at least one heater when the sensor senses a user taking a puff. Alternatively, the system may further comprise a manually operable switch, for a user to initiate a puff.

Preferably, the electrically heated smoking system further comprises a housing for receiving the aerosol-forming substrate and designed to be grasped by a user. The housing preferably houses the at least one heater, the power supply and any other components required for the system, such as electronic circuitry. In one embodiment, the housing comprises a shell and a replaceable mouthpiece.

In one preferred embodiment, the power supply is a DC voltage source. In one embodiment, the power supply is a Lithium-ion battery. Alternatively, the power supply may be a Nickel-metal hydride battery, a Nickel cadmium battery or a Lithium Phosphate battery.

Features described in relation to one aspect of the disclosure may also be applicable to another aspect of the disclosure. In particular, features and advantages of the one or more electrically conductive tracks acting as both a resistive heater and as a temperature sensor described in relation to the first aspect of the disclosure may also be applicable to the second aspect of the disclosure. Features and advantages of the thermally insulating material described in relation to the second aspect of the invention may also be applicable to the first aspect of the invention.

The embodiments of the disclosure will be further described, by way of example only, with reference to the accompanying drawings, in which:

Figures 1a to 1d show a first embodiment of a method for forming a heater for an electrical smoking system;
Figures 2a to 2e show a second embodiment of a method for forming a heater for an electrical smoking system;
Figures 3a to 3f show a third embodiment of a method for forming a heater for an electrical smoking system;
Figure 4 shows a first embodiment of a heater for use in an electrically heated smoking system; and
Figures 5a and 5b show a second embodiment of a heater for use in an electrically heated smoking system.

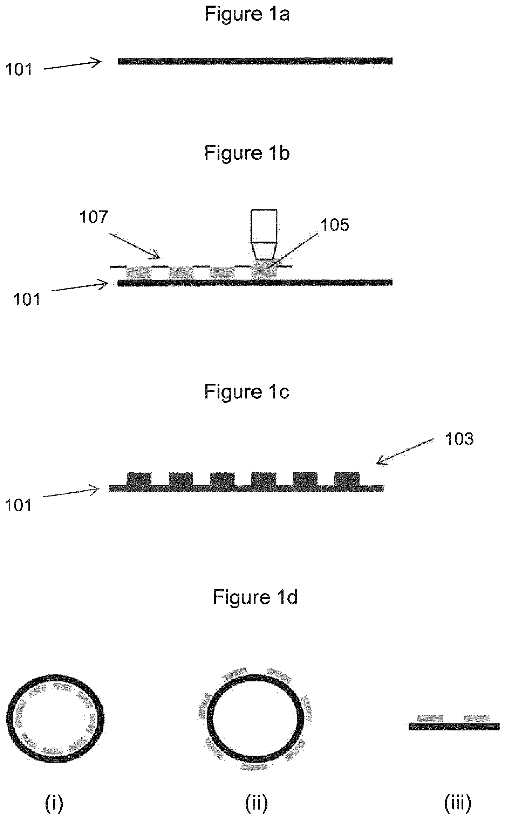

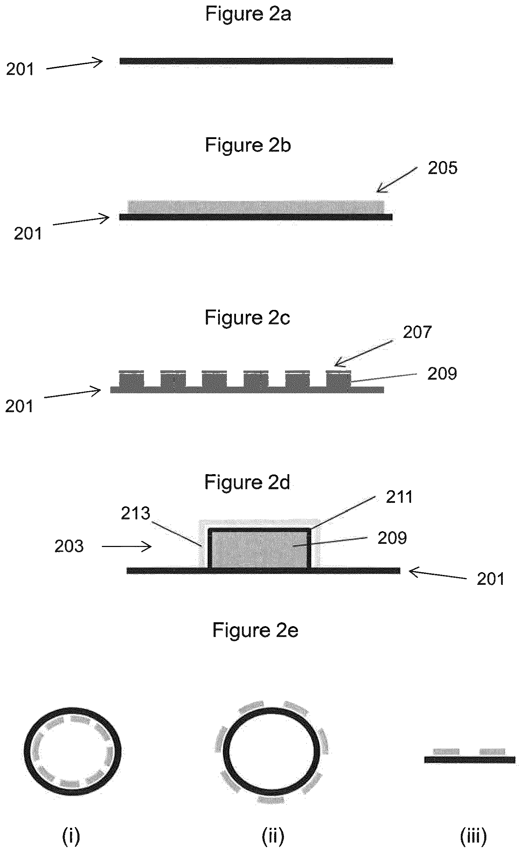

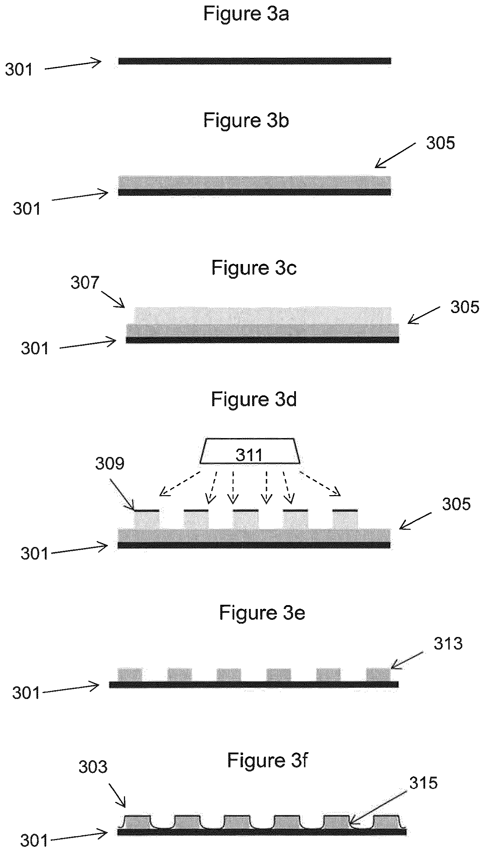

As discussed above, the disclosure provides an electrically heated smoking system including a heater. The heater comprises one or more electrically conductive tracks on an electrically insulating substrate. The heater may be formed by a number of different manufacturing processes. Figures 1a to 1d show a first manufacturing process. Figures 2a to 2d show a second manufacturing process. Figures 3a to 3d show a third manufacturing process. Some embodiments not forming part of the claimed invention are described for information only.

Figures 1a to 1d show a manufacturing process using a technique similar to that used in screen printing. This manufacturing process may be used with the first or second aspect of the disclosure. Referring to Figure 1a, firstly an electrically insulating substrate 101 is provided. The electrically insulating substrate may comprise any suitable electrically insulating material, for example, but not limited to, a ceramic such as MICA, glass or paper. Alternatively, the electrically insulating substrate may comprise an electrical conductor that is insulated from the electrically conductive tracks (produced in Figure 1b and discussed below), for example, by oxidizing or anodizing its surface or both. One example is anodized aluminium. Alternatively, the electrically insulating substrate may comprise an electrical conductor to which is added an intermediate coating called a glaze. In that case, the glaze has two functions: to electrically insulate the substrate from the electrically conductive tracks, and to reduce bending of the substrate. Folds existing in the electrically insulating substrate can lead to cracks in the electrically conductive paste (applied in Figure 1b and discussed below) causing defective resistors.

Referring to Figure 1b, the electrically insulating substrate is held securely, such as by a vacuum, while a metal paste 105 is coated onto the electrically insulating substrate using a cut out 107. Any suitable metal paste may be used but, in one example, the metal paste is silver paste. In one particularly advantageous example, the paste comprises 20% to 30% of binders and plasticizers and 70% to 80% of metal particles, typically silver particles. The cut out 107 provides a template for the desired electrically conductive tracks. After the metal paste 105 has been coated onto the electrically insulating substrate 101, the electrically insulating substrate and paste are fired, for example, in a sintering furnace. In a first firing phase at between 200°C and 400°C, the organic binders and solvents are burned out. In a second firing phase at between 350°C and 500°C the metal particles are sintered.

Referring to Figure 1c, the result is an electrically insulating substrate 101 having an electrically conductive track or tracks 103 thereon. The electrically conductive track or tracks comprises heating resistors and the necessary connection pads.

Finally, the electrically insulating substrate 101 and electrically conductive tracks 103 are formed into the appropriate form for use as a heater in an electrically heated smoking system. Referring to Figure 1d, the electrically insulating substrate 101 may be rolled into tubular form, such that the electrically conductive tracks lie on the inside of the electrically insulating substrate (Figure 1d(i)). In that case, the tube may function as an external heater for a solid plug of aerosol-forming material. The internal diameter of the tube may be the same as or slightly bigger than the diameter of the aerosol-forming plug. Alternatively, the electrically insulating substrate 101 may be rolled into tubular form, such that the electrically conductive tracks lie on the outside of the electrically insulating substrate (Figure 1d(ii)). In that case, the tube may function as an internal heater and can be inserted directly into the aerosol-forming substrate. This may work well when the aerosol-forming substrate takes the form of a tube of tobacco material, for example, such as tobacco mat. In that case, the external diameter of the tube may be the same as or slightly smaller than the internal diameter of the aerosol-forming substrate tube. Alternatively, if the electrically insulating substrate is sufficiently rigid or is reinforced in some way, some or all of the electrically insulating substrate and electrically conductive tracks may be used directly as an internal heater (Figure 1 d(iii)) simply by inserting the electrically insulating substrate and electrically conductive tracks directly into the aerosol-forming substrate.

Figures 2a to 2e show a second manufacturing process for a heater for an electrically heated smoking system. This manufacturing process may be used with the first or second aspect of the disclosure. This manufacturing process is based on PCB manufacturing technology. Referring to Figure 2a, firstly an electrically insulating substrate 201 is provided. Again, the electrically insulating substrate may comprise any suitable electrically insulating material. In this example, the electrically insulating substrate 201 comprises polyimide.

Referring to Figure 2b, secondly a metal foil 205 is applied over substantially the entire electrically insulating substrate 201. This may be achieved by lamination or by a physical vapour deposition (PVD) process, followed by galvanic reinforcement. Any suitable metal may be used but, in one example, the metal foil is copper. Copper has the advantage that it has a high temperature coefficient of resistance. This may mean that it is relatively straightforward to use the electrically conductive tracks as a temperature sensor as well as a heater. This is discussed more fully below. Other metals may be used, however, for example, but not limited to, nickel or platinum.

After the metal foil 205 has been applied to the electrically insulating substrate, unwanted areas of the copper are removed with a subtractive method. Referring to Figure 2c, typically a mask 207 is used combined with chemical etching, which dissolves the copper in all areas unprotected by the mask. This results in the device shown in Figure 2c which comprises electrically insulating substrate 201 with electrically conductive areas 209.

Referring to Figure 2d, the electrically conductive areas 209 may then be plated. Figure 2d shows a single electrically conductive area 209 for simplicity. Plating is advantageous if using copper, as copper oxidizes quickly. It may be difficult to solder the copper, to form the necessary connections, if an oxide layer has already formed. In this example, the electrically conductive areas 209 are plated with a double layer comprising a first layer 211 of nickel followed by a second layer 213 of gold. The result is an electrically insulating substrate 201 having an electrically conductive track or tracks 203 thereon. The electrically conductive track or tracks comprises heating resistors and the necessary connection pads.

Finally, the electrically insulating substrate 201 and electrically conductive tracks 203 are formed into the appropriate form for use as a heater in an electrically heated smoking system. Referring to Figure 2e, the electrically insulating substrate 201 may be rolled into tubular form, such that the electrically conductive tracks lie on the inside of the electrically insulating substrate (Figure 2e(i)). In that case, the tube may function as an external heater for an aerosol-forming substrate. Alternatively, the electrically insulating substrate 201 may be rolled into tubular form, such that the electrically conductive tracks lie on the outside of the electrically insulating substrate (Figure 2e(ii)). In that case, the tube may function as an internal heater and can be inserted directly into the aerosol-forming substrate. Alternatively, if the electrically insulating substrate is sufficiently rigid or is reinforced in some way, some or all of the electrically insulating substrate and electrically conductive tracks may be used as an internal heater (Figure 2e(iii)) simply by inserting the electrically insulating substrate and electrically conductive tracks directly into the aerosol-forming substrate.

Note that the method described with reference to Figures 2a to 2e may also be used to form an additional thermally insulating, reflective layer. This will be discussed in detail below.

Figures 3a to 3f show a third manufacturing process for a heater for an electrically heated smoking system. This manufacturing process may be used with the first or second aspect of the disclosure. This manufacturing process is based on a photolithography technique. Referring to Figure 3a, first an electrically insulating substrate 301 is provided. Again, the electrically insulating substrate may comprise any suitable electrically insulating material. In this example, the electrically insulating substrate 301 comprises a thick ceramic, for example, but not limited to, Alumina ($Al_2O_3$) or Zircona ($ZrO_2$).

Referring to Figure 3b, a structured metal film 305 is formed over the electrically insulating substrate 301. Any suitable metal may be used but, in this example, the metal film is platinum.

Referring to Figure 3c, a photoresist layer 307 is then applied over the metal film 305. The photoresist layer may be applied by any suitable technique, for example, but not limited to spin coating.

Referring to Figure 3d, unwanted areas of the photoresist are removed. This is achieved by using a mask 309 and exposing the photoresist to intense light from a light source 311. A chemical change occurs in the exposed areas of the photoresist, which allows those areas to be subsequently removed by a chemical agent called a developer.

Once the photoresist has been removed in the non protected areas, the metal film 305 is etched by wet or dry etching. This dissolves the metal film in all areas unprotected by the photoresist. Once the metal has been etched, the remaining photoresist is removed by a solvent. This results in the device shown in Figure 3e which comprises electrically insulating substrate 301 with electrically conductive areas 313.

Referring to Figure 3f, finally the electrically insulating substrate 301 and electrically conductive areas 313 may optionally be coated with a passivation layer 315 to prevent corrosion or oxidation of the electrically conductive areas. In this example, the passivation layer is a glass layer. The result is an electrically insulating substrate 301 having an electrically conductive track or tracks 303 thereon. The electrically conductive track or tracks comprises heating resistors and the necessary connection pads.

This heater can be mounted in the electrically heated smoking system using a special frame, for example a metallic clamp, or the heater may be an integral part of a monolithic ceramic base sitting within the electrically heated smoking system.

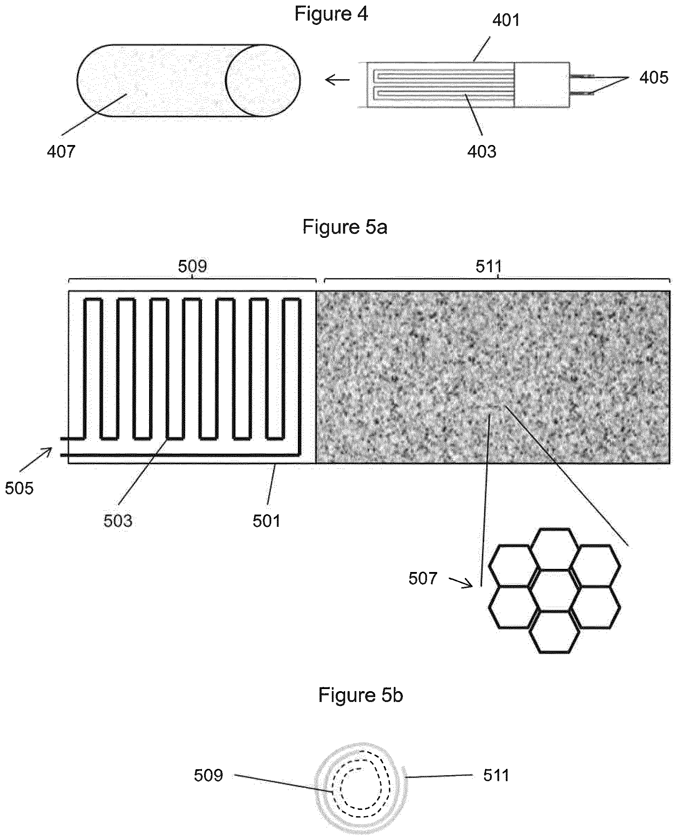

Figures 4 and 5a and 5b show two alternative embodiments of a heater.

Figure 4 shows a first embodiment of a heater in use with an aerosol-forming substrate outside the scope of the invention but provided for information. In Figure 4, the heater 400 comprises a flat, rigid electrically insulating substrate 401 having thereon electrically conductive tracks 403. (The heater may be of the form shown in Figure 1 d(iii) or Figure 2e(iii).) The electrically conductive tracks are connectable to a power supply (not shown) via connections 405. The heater 400 may be inserted directly into a plug of aerosol-forming substrate, shown schematically at 407. If the electrically conductive tracks have suitable temperature coefficient of resistance characteristics, they may act as resistive heaters as well as a temperature sensor. The heater may be combined with a thermally insulating material for thermally insulating the at least one heater from the outside of the electrically heated smoking system with which it is used.

Figures 5a and 5b show a second embodiment of the heater. In Figures 5a and 5b, the heater comprises an electrically insulating substrate 501. On a first portion 509 of the electrically insulating substrate, there are electrically conductive tracks 503. The electrically conductive tracks 503 are connectable to a power supply (not shown) via connections 505. On a second portion 511 of the electrically insulating substrate 501, a thermally insulating reflective honeycomb structure 507 is formed on the electrically insulating substrate. The heater of Figure 5a is designed to be rolled into a tube from left to right, such that the portion 509 of the electrically insulating substrate having the electrically conductive tracks is on the inside and the portion 511 of the electrically insulating substrate having the thermally insulating honeycomb structure 507 is on the outside. Preferably the thermally insulating material is also highly reflective. The resulting heater is shown schematically in Figure 5b. The honeycomb structure may then be used to thermally insulate the heater and is preferably metal. The heater shown in Figure 5b may be used an external heater, with the thermally insulating reflective honeycomb structure 507 on the outside so as to insulate the heater from the outside of the electrically heated smoking system with which it is used. This reduces heat loss and also protects a user's hand from burning.

In Figures 5a and 5b, the thermally insulating reflective honeycomb structure is shown as an integral part of the heater. Alternatively, however, the honeycomb structure may be formed separately and used in the electrically heated smoking system as an independent element. For an external heater, the honeycomb structure may be wrapped around the electrically insulating substrate and electrically conductive tracks. For an internal heater, the honeycomb structure may be provided around the aerosol-forming substrate. In addition, alternative structural arrangements for the thermally insulating material are possible.

The heater shown in Figures 5a and 5b may also be used in the first aspect of the disclosure: if the electrically conductive tracks have suitable temperature coefficient of resistance characteristics, they may act as resistive heaters as well as a temperature sensor.

As already mentioned, the manufacturing process illustrated in Figures 2a to 2e may also be used to create the honeycomb structure 507. In a similar way to Figure 2d, individual areas on the electrically insulating substrate may be plated. If the underlying area is then dissolved or removed in another way, the plating will form air cavities providing thermal insulation. In a preferred arrangement, the air cavities are provided in a honeycomb structure, but other arrangements are also envisaged. In addition, the greatest thermal insulation is provided when several layers of the thermally insulating structure are used, for example, by rolling around or stacking up several layers. Advantageously, the plating may comprise only a single layer of gold. Gold is particularly useful as it will also reflect heat towards the inside of the electrically heated smoking system, further reducing heat loss. Alternatively, the plating may comprise a single layer of another metal, such as silver. Alternatively, the plating may comprise two layers, similar to that shown in Figure 2d.

A number of advantages are provided by using a heater comprising electrically conductive tracks formed on an electrically insulating substrate. The size of components required in the electrically heated smoking system can be reduced. This allows the size of the electrically heated smoking system to be reduced. In addition, the electrically insulating substrate can be very thin allowing further size reduction. In addition, some or all of the necessary electronics, wiring and connections may be incorporated on the same electrically insulating substrate as the heater.

In addition, the heater may be manufactured more straightforwardly and cost effectively than some prior art heaters which require each heating element to be individually formed. The heater allows a great deal of flexibility in the design: the electrically conductive tracks can be straightforwardly arranged on the electrically insulating substrate as desired and in order to give the desired heat distribution.

In addition, assuming the material used for the electrically conductive tracks has appropriate temperature coefficient of resistance characteristics, the electrically conductive tracks can act both as resistive heaters and as a temperature sensor. This can further reduce the size of the electrically heated smoking system, since no separate temperature sensor will be required. This will now be described in more detail.

The temperature coefficient of resistance is a measure of the change in resistance with a given change in temperature. The general formula is given by:

$$R = R_0(1 + \alpha T)$$

where R is resistance, $R_0$ is the resistance at a given temperature (usually 0 °C), T is the temperature, and $\alpha$ is the temperature coefficient of resistance. The temperature dependence of conductors is substantially linear.

In one method, the voltage across and the current through the electrically conductive track may be measured and the resistance determined. Then, assuming knowledge of $R_0$ and $\alpha$ (both of which will be known for a given material), the temperature may be determined. That is to say, the electrically conductive track can act as temperature sensor as well as a resistive heater.

The material must have a reasonably reliable temperature coefficient of resistance, $\alpha$. That is to say, one that does not change considerably over time or under certain conditions. In addition, there may be advantages in using a material having a large value of the temperature coefficient of resistance, $\alpha$, since this will mean that a relatively small change in temperature results in a large change in resistance. Materials having a large value of $\alpha$ include platinum, nickel and copper.

**Claims**

1. An electrically heated smoking system and a solid aerosol-forming substrate (407) in the form of a cylindrical plug received in the electrically heated smoking system, the electrically heated smoking system comprising:
   at least one heater for heating the aerosol-forming substrate to form an aerosol, and a power supply for supplying power to the at least one heater, wherein the at least one heater comprises one or more electrically conductive metallic tracks (203) comprising an electrically resistive material on an electrically insulating substrate (201), wherein the electrically insulating substrate comprises polyimide and is tubular, wherein the at least one heater surrounds or partially surrounds the aerosol-forming substrate (407).

2. An electrically heated smoking system and a solid aerosol-forming substrate according to claim 1, further comprising a thermally insulating material (507) for insulating the at least one heater, wherein the thermally insulating material comprises a metal.

3. An electrically heated smoking system and a solid aerosol-forming substrate according to claim 2, wherein the thermally insulating material comprises a plurality of air cavities.

4. An electrically heated smoking system and a solid aerosol-forming substrate according to claim 2 or 3, wherein the thermally insulating material is provided in the electrically heated smoking system as a separate element.

5. An electrically heated smoking system and a solid aerosol-forming substrate according to claim 2, 3 or 4, wherein the thermally insulating material is positioned around the aerosol forming substrate.

6. An electrically heated smoking system and a solid aerosol-forming substrate according to any preceding claim, wherein the one or more electrically conductive tracks (203) comprise a plurality of portions, each portion being separately connectable to the power supply.

7. An electrically heated smoking system and a solid aerosol-forming substrate according to claim 6, further comprising electronic circuitry arranged to control supply of power from the power supply to the at least one heater so that different portions of the one or more electrically conductive tracks are heated for different durations, or to different temperatures, or both for different durations and different temperatures.

8. An electrically heated smoking system and a solid aerosol-forming substrate according to claim 6 or 7, further comprising electronic circuitry arranged to control supply of power from the power supply to the at least one heater so that different portions of the one or more electrically conductive tracks are activated at different times.

9. An electrically heated smoking system and a solid aerosol-forming substrate according to any one of the preceding claims, wherein the one or more electrically conductive tracks (203) are on the inside of the tubular electrically insulating substrate.

10. An electrically heated smoking system and a solid aerosol-forming substrate according to any of claims 1 to 8, wherein the one or more electrically conductive tracks (203) are on the outside of the tubular electrically insulating substrate.

11. An electrically heated smoking system and a solid aerosol-forming substrate according to any preceding claim, wherein the aerosol-forming substrate comprises a tobacco-containing material containing volatile tobacco flavour compounds which are released from the aerosol-forming substrate upon heating.

12. An electrically heated smoking system and a solid aerosol-forming substrate according to any preceding claim, wherein the aerosol-forming substrate is partially contained within the electrically heated smoking system.

13. An electrically heated smoking system and a solid aerosol-forming substrate according to claim 12, wherein the aerosol-forming substrate forms part of a separate article and during operation the user puffs directly on the separate article.

14. An electrically heated smoking system and a solid aerosol-forming substrate according to any preceding claim, wherein the electrically heated smoking system is adapted to receive a solid aerosol-forming substrate in a container or cartridge.

15. Use of an electrically heated smoking system for receiving a solid aerosol-forming substrate (407) in the form of a cylindrical plug, the system comprising: at least one heater for heating the aerosol-forming substrate to form an aerosol, and a power supply for supplying power to the at least one heater, wherein the at least one heater comprises one or more electrically conductive metallic tracks (203) on an electrically insulating substrate (201), wherein the electrically insulating substrate comprises polyimide and is tubular, and wherein during use the at least one heater surrounds or partially surrounds the aerosol-forming substrate (407).

**Patentansprüche**

1. Elektrisch beheiztes Rauchsystem und festes aerosolbildendes Substrat (407) in der Form eines in dem elektrisch beheizten Rauchsystem aufgenommenen zylindrischen Einsatzes, das elektrisch beheizte Rauchsystem aufweisend:
zumindest eine Heizvorrichtung zum Erwärmen des aerosolbildenden Substrats zur Ausbildung eines Aerosols und eine Energieversorgung zum Zuführen von Energie an zumindest eine Heizvorrichtung, wobei die zumindest eine Heizvorrichtung eine oder mehrere elektrisch leitende Bahnen (203), aufweisend elektrisch widerstandsbehaftetes Material auf einem elektrisch isolierenden Substrat (201), aufweist, wobei das elektrisch isolierende Substrat Polyimid aufweist und röhrenförmig ist, wobei die zumindest eine Heizvorrichtung das aerosolbildende Substrat (407) umgibt oder teilweise umgibt.

2. Elektrisch beheiztes Rauchsystem und festes aerosolbildendes Substrat nach Anspruch 1, ferner aufweisend ein wärmedämmendes Material (507) zum Isolieren der zumindest einen Heizvorrichtung, wobei das wärmedämmende Material ein Metall aufweist.

3. Elektrisch beheiztes Rauchsystem und festes aerosolbildendes Substrat nach Anspruch 2, wobei das wärmedämmende Material eine Vielzahl von Lufthohlräumen aufweist.

4. Elektrisch beheiztes Rauchsystem und festes aerosolbildendes Substrat nach Anspruch 2 oder 3, wobei das wärmedämmende Material als ein getrenntes Element in dem elektrisch beheizten Rauchsystem vorgesehen ist.

5. Elektrisch beheiztes Rauchsystem und festes aerosolbildendes Substrat nach Anspruch 2, 3 oder 4, wobei das wärmedämmende Material um das aerosolbildende Substrat herum angeordnet ist.

6. Elektrisch beheiztes Rauchsystem und festes aerosolbildendes Substrat nach einem der vorhergehenden Ansprüche, wobei die eine oder die mehreren elektrisch leitenden Bahnen (203) eine Vielzahl von Abschnitten aufweisen, wobei jeder Abschnitt separat mit der Energieversorgung verbindbar ist.

7. Elektrisch beheiztes Rauchsystem und festes aerosolbildendes Substrat nach Anspruch 6, ferner aufweisend zum Regeln der Zuführung von Energie von der Energieversorgung an die zumindest eine Heizvorrichtung angeordnete elektronische Schaltkreise, sodass verschiedene Abschnitte von der einen oder den mehreren elektrisch leitenden Bahnen für verschiedene Gebrauchszeiten oder auf verschiedene Temperaturen oder sowohl für verschiedene Gebrauchszeiten als auch auf verschiedene Temperaturen erwärmt werden.

8. Elektrisch beheiztes Rauchsystem und festes aerosolbildendes Substrat nach Anspruch 6 oder 7, ferner aufweisend zum -Regeln der Zuführung von Energie von der Energieversorgung an die zumindest eine Heizvorrichtung angeordnete elektronische Schaltkreise, sodass verschiedene Abschnitte von der einen oder den mehreren elektrisch leitenden Bahnen zu verschiedenen Zeiten aktiviert werden.

9. Elektrisch beheiztes Rauchsystem und festes aerosolbildendes Substrat nach einem der vorhergehenden Ansprüche, wobei sich die eine oder die mehreren elektrisch leitenden Bahnen (203) auf der Innenseite des röhrenförmigen elektrisch isolierenden Substrats befinden.

**10.** Elektrisch beheiztes Rauchsystem und festes aerosolbildendes Substrat nach einem der Ansprüche 1 bis 8, wobei sich die eine oder die mehreren elektrisch leitenden Bahnen (203) auf der Außenseite des röhrenförmigen elektrisch isolierenden Substrats befinden.

**11.** Elektrisch beheiztes Rauchsystem und festes aerosolbildendes Substrat nach einem der vorhergehenden Ansprüche, wobei das aerosolbildende Substrat ein tabakhaltiges Material mit flüchtigen Tabakgeschmacksverbindungen aufweist, die beim Erwärmen aus dem aerosolbildenden Substrat freigesetzt werden.

**12.** Elektrisch beheiztes Rauchsystem und festes aerosolbildendes Substrat nach einem der vorhergehenden Ansprüche, wobei das aerosolbildende Substrat teilweise innerhalb des elektrisch beheizten Rauchsystems enthalten ist.

**13.** Elektrisch beheiztes Rauchsystem und festes aerosolbildendes Substrat nach Anspruch 12, wobei das aerosolbildende Substrat einen Teil eines separaten Artikels ausbildet und der Benutzer während des Betriebs direkt an dem separaten Artikel zieht.

**14.** Elektrisch beheiztes Rauchsystem und festes aerosolbildendes Substrat nach einem der vorhergehenden Ansprüche, wobei das elektrisch beheizte Rauchsystem zur Aufnahme eines festen aerosolbildenden Substrats in einem Behälter oder einer Patrone angepasst ist.

**15.** Gebrauch eines elektrisch beheizten Rauchsystems zur Aufnahme eines festen aerosolbildenden Substrats (407) in der Form eines zylindrischen Einsatzes, das System aufweisend: zumindest eine Heizvorrichtung zum Erwärmen des aerosolbildenden Substrats zur Ausbildung eines Aerosols und eine Energieversorgung zum Zuführen von Energie an zumindest eine Heizvorrichtung, wobei die zumindest eine Heizvorrichtung eine oder mehrere elektrisch leitende Bahnen (203) auf einem elektrisch isolierenden Substrat (201), aufweist, wobei das elektrisch isolierende Substrat Polyimid aufweist und röhrenförmig ist, und wobei, während des Gebrauchs, die zumindest eine Heizvorrichtung das aerosolbildende Substrat (407) umgibt oder teilweise umgibt.

**Revendications**

**1.** Système à fumer chauffé électriquement et substrat formant aérosol solide (407) sous la forme d'un bout-filtre cylindrique reçu dans le système à fumer chauffé électriquement, le système à fumer chauffé électriquement comprenant :
au moins un dispositif de chauffage destiné à chauffer le substrat formant aérosol afin de former un aérosol, et une alimentation électrique destinée à alimenter électriquement l'au moins un dispositif de chauffage, dans lesquels l'au moins un dispositif de chauffage comprend une ou plusieurs pistes métalliques électroconductrices (203) comprenant une matière électrorésistante sur un substrat électro-isolant (201), dans lesquels le substrat électro-isolant comprend du polyimide et est tubulaire, dans lesquels l'au moins un dispositif de chauffage entoure ou entoure partiellement le substrat formant aérosol (407).

**2.** Système à fumer chauffé électriquement et substrat formant aérosol solide selon la revendication 1, comprenant en outre une matière thermo-isolante (507) destinée à isoler l'au moins un dispositif de chauffage, dans lesquels la matière thermo-isolante comprend un métal.

**3.** Système à fumer chauffé électriquement et substrat formant aérosol solide selon la revendication 2, dans lesquels la matière thermo-isolante comprend une pluralité de cavités d'air.

**4.** Système à fumer chauffé électriquement et substrat formant aérosol solide selon la revendication 2 ou 3, dans lesquels la matière thermo-isolante est fournie dans le système à fumer chauffé électriquement comme un élément séparé.

**5.** Système à fumer chauffé électriquement et substrat formant aérosol solide selon la revendication 2, 3 ou 4, dans lesquels la matière thermo-isolante est positionnée autour du substrat formant aérosol.

**6.** Système à fumer chauffé électriquement et substrat formant aérosol solide selon l'une quelconque des revendications précédentes, dans lesquels les une ou plusieurs pistes électroconductrices (203) comprennent une pluralité de parties, chaque partie pouvant être raccordée séparément à l'alimentation électrique.

**7.** Système à fumer chauffé électriquement et substrat formant aérosol solide selon la revendication 6, comprenant en outre des circuits électroniques agencés pour commander l'alimentation en électricité depuis l'alimentation électrique jusqu'à l'au moins un dispositif de chauffage de sorte que différentes parties des une ou plusieurs pistes électroconductrices sont chauffées pendant différentes durées, ou à différentes températures, ou les deux pendant différentes durées et à différentes températures.

**8.** Système à fumer chauffé électriquement et substrat formant aérosol solide selon la revendication 6 ou 7, comprenant en outre des circuits électroniques agencés pour commander l'alimentation en électricité depuis l'alimentation électrique jusqu'à l'au moins un dispositif de chauffage de sorte que différentes parties des une ou plusieurs pistes électroconductrices sont activées à différents moments.

9. Système à fumer chauffé électriquement et substrat formant aérosol solide selon l'une quelconque des revendications précédentes, dans lesquels les une ou plusieurs pistes électroconductrices (203) sont à l'intérieur du substrat électro-isolant tubulaire.

10. Système à fumer chauffé électriquement et substrat formant aérosol solide selon l'une quelconque des revendications 1 à 8, dans lesquels les une ou plusieurs pistes électroconductrices (203) sont à l'extérieur du substrat électro-isolant tubulaire.

11. Système à fumer chauffé électriquement et substrat formant aérosol solide selon l'une quelconque des revendications précédentes, dans lesquels le substrat formant aérosol comprend une matière contenant du tabac contenant des composés d'arôme de tabac volatils qui se dégagent du substrat formant aérosol lors du chauffage.

12. Système à fumer chauffé électriquement et substrat formant aérosol solide selon l'une quelconque des revendications précédentes, dans lesquels le substrat formant aérosol est partiellement contenu dans le système à fumer chauffé électriquement.

13. Système à fumer chauffé électriquement et substrat formant aérosol solide selon la revendication 12, dans lesquels le substrat formant aérosol fait partie d'un article séparé et pendant le fonctionnement, l'utilisateur tire directement des bouffées de l'article séparé.

14. Système à fumer chauffé électriquement et substrat formant aérosol solide selon l'une quelconque des revendications précédentes, dans lesquels le système à fumer chauffé électriquement est adapté pour recevoir un substrat formant aérosol solide dans un récipient ou une cartouche.

15. Utilisation d'un système à fumer chauffé électriquement pour la réception d'un substrat formant aérosol solide (407) sous la forme d'un bout-filtre cylindrique, le système comprenant : au moins un dispositif de chauffage destiné à chauffer le substrat formant aérosol afin de former un aérosol, et une alimentation électrique destinée à alimenter électriquement l'au moins un dispositif de chauffage, dans lesquels l'au moins un dispositif de chauffage comprend une ou plusieurs pistes métalliques électroconductrices (203) sur un substrat électro-isolant (201), dans lesquels le substrat électro-isolant comprend du polyimide et est tubulaire, et dans lesquels, pendant l'utilisation, l'au moins un dispositif de chauffage entoure ou entoure partiellement le substrat formant aérosol (407).

## Figure 1a

101

## Figure 1b

107

105

101

## Figure 1c

103

101

## Figure 1d

(i)

(ii)

(iii)

## Figure 2a

201 →

## Figure 2b

205

201 →

## Figure 2c

207

209

201 →

## Figure 2d

213

203 →

211

209

201

## Figure 2e

(i)

(ii)

(iii)

## Figure 3a

301 →

## Figure 3b

305

301 →

## Figure 3c

307

305

301 →

## Figure 3d

311

309

305

301 →

## Figure 3e

313

301 →

## Figure 3f

303

315

301 →

Figure 4

Figure 5a

Figure 5b

**EP 3 248 487 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5353813 A
- WO 9527412 A
- US 5322075 A